# EUROPÄISCHE PATENTSCHRIFT

(11) **EP 1 040 321 B1**
(45) Veröffentlichungstag und Bekanntmachung des Hinweises auf die Patenterteilung: **13.02.2002**
(21) Anmeldenummer: 98962256.8
(22) Anmeldetag: 12.11.1998
(51) Int. Cl.: G01D 11/24, G01P 1/02

(54) **MESSWERTAUFNEHMER UND EIN VERFAHREN ZU DESSEN HERSTELLUNG**
TRANSDUCER AND METHOD FOR PRODUCING THE SAME
TRANSDUCTEUR ET SON PROCEDE DE FABRICATION

(30) Priorität: 20.12.1997 DE 19757006
(43) Veröffentlichungstag der Anmeldung: 04.10.2000
(73) Patentinhaber: ROBERT BOSCH GMBH, 70442 Stuttgart (DE)
(72) Erfinder: DODERER, Klaus, D-75305 Neuenburg (DE); LEIN, Ralf, D-70806 Kornwestheim (DE)
(86) Internationale Anmeldenummer: DE9803313
(87) Internationale Veröffentlichungsnummer: WO9932855

(56) Entgegenhaltungen:
- EP-A- 0 655 609
- WO-A-97/22847
- FR-A- 2 683 315
- US-A- 5 124 175
- PATENT ABSTRACTS OF JAPAN vol. 011, no. 242 (C-438), 7. August 1987 & JP 62 050475 A (C-REN KK), 5. März 1987

## Beschreibung

### Stand der Technik

Die Erfindung betrifft einen Messwertaufnehmer, insbesondere einen elektrischen Messwertaufnehmer für Bewegungen eines mechanischen Teils, nach dem Oberbegriff des Hauptanspruchs und ein Verfahren zu dessen Herstellung.

Bei einem aus der DE 38 27 937 A1 bekannten Messwertaufnehmer ist eine Messschaltung mit einem Sensorelement auf Trägerteilen angeordnet und mit einem Gehäuse umgeben. Das Gehäuse weist ein kappenartiges Anschlussteil auf, welches das eine Ende eines Anschlußkabels aufnimmt. Das kappenartige Anschlussteil, das ein erstes Trägerteil bildet, nimmt ein zweites Trägerteil auf, welches zusammen mit einem vierten Trägerteil ein drittes Trägerteil aufnimmt und zum ersten Trägerteil positioniert ist.

Die elektronische Messschaltung ist zwischen dem dritten Trägerteil und dem vierten Trägerteil in einer Kammer angeordnet und mittels einer Gießmasse vergossen. Diese elektronische Schaltung ist mit einem Leitungsstück verbunden, welches zwischen dem zweiten und vierten Trägerteil in Richtung auf das Sensorelement geführt ist. Im Bereich des Sensorelementes ist zum zweiten und vierten Trägerteil ein weiteres Trägerteil angeordnet, welches das Sensorelement aufnimmt. Das Gehäuse umgibt dabei zumindest teilweise das zweite, dritte, vierte und ein weiteres Trägerteil und greift an dem ersten Trägerteil, welches als das kappenförmige Anschlussteil ausgebildet ist, an. Damit der Messwertaufnehmer in seiner bestimmungsgemäßen Position angeordnet werden kann, ist ein weiteres Trägerteil vorgesehen, welches eine Bohrung zur Aufnahme des Gehäuses aufweist und darin den Messwertaufnehmer trägt.

Eine derartige Ausgestaltung eines elektrischen Messwertaufnehmers weist vor allem den Nachteil auf, dass, wie oben beschrieben, eine Vielzahl von Trägerteilen erforderlich ist, um die Messschaltung aufzunehmen und um eine elektrische Verbindung zwischen dem Sensorelement und dem Anschlußkabel mittels elektrischer Verbindungsleitungen zu schaffen. Dies erfordert eine komplizierte Ausbildung der zahlreichen Trägerteile, wodurch hohe Werkzeugkosten entstehen. Weiterhin ist die Montage aufgrund der hohen Anzahl von Trägerteilen kostenintensiv. Hinzu kommt, dass durch die komplizierte Ausgestaltung der Trägerteile und die dadurch bedingte zwangsweise Reihenfolge der Montage eine hohe Fehlerquote bezüglich der Funktionstüchtigkeit eines derartigen elektrischen Messwertaufnehmers gegeben ist.

### Vorteile der Erfindung

Der Messwertaufnehmer nach der eingangs erwähnten Gattung ist mit den erfindungsgemäßen Merkmalen des Hauptanspruchs in vorteilhafter Weise weitergebildet, da hier ein einfacher und kompakter Aufbau möglich geworden ist. Auf einfache Weise sind an einem einzigen Trägerteil das Sensorelement, die Messschaltung, die Kontaktstifte und die Verbindungsleitungen angebracht. Das Trägerteil besteht erfindungsgemäß aus einem mit Palladium gefüllten Kunststoffkörper, auf den an vorgegebenen Stellen Leiterbahnen zur Bildung der Verbindungsleitungen galvanisch anbringbar sind.

Bei einer alternativen Ausführungsform des Messwertaufnehmers sind an einem ersten Trägerteil das Sensorelement, die Messschaltung und die Verbindungsleitungen; die Kontaktstifte sind an einem weiteren Trägerteil angebracht. Auch hier besteht das erste Trägerteil aus einem mit Palladium gefüllten Kunststoffkörper, auf den an vorgegebenen Stellen Leiterbahnen zur Bildung der Verbindungsleitungen galvanisch anbringbar sind. Mit dieser zweiteiligen Version des Trägerteils können auf einfache Weise verschiedene Längenversionen des Messwertaufnehmers realisiert werden, da das weitere Trägerteil mit den Kontaktstiften separat auf das erste Trägerteil aufgesetzt werden kann. Die Kontaktstifte können in beiden Fällen galvanisch durch eine Cu- oder Sn-Schicht aufgebracht werden oder auch durch ein metallisches Einlegeteil hergestellt werden.

Um den Messwertaufnehmer als Phasengeber zur Erfassung des Drehwinkels in einer mechanischen Anordnung auszubilden, ist das Sensorelement aus einem in das Trägerteil eingegossenen oder verspannten Magneten gebildet und mit einem Hall-Element, als Bestandteil der Messschaltung, wird eine Beeinflussung des Magnetfeldes durch ein drehendes Teil detektiert.

Die Herstellung des erfindungsgemäßen Messwertaufnehmers kann insbesondere dadurch vereinfacht werden, dass separate elektronische Bauelemente und/oder integrierte elektronische Schaltungen der Messschaltung direkt auf die Oberfläche des Trägerteils für das Sensorelement aufgebracht werden können. Die elektrischen Anschlüsse werden dabei durch Reflowlöten oder Bonden der Anschlussdrähte mit den als Leiterbahnen fungierenden Stellen der Oberfläche des Trägerteils in besonders vorteilhafter Weise hergestellt.

Es ist weiterhin besonders vorteilhaft, wenn die Verbindungsleitungen, insbesondere in Längsrichtung zwischen dem Sensorelement und den Kontaktstiften, auf der Oberfläche des Trägerteils Wellen zur Ermöglichung einer Längsdehnung aufweisen. Hiermit kann auf einfache Weise eine Temperaturausdehnung des Trägerteils kompensiert werden.

Bei einem besonders vorteilhaften Herstellungsverfahren wird in einem ersten Verfahrensschritt eines sogenannten "Molded Interconnected Device (MID)"-Herstellungsverfahrens zunächst das mit Palladium gefüllte Trägerteil spritzgegossen. In einem zweiten Verfahrensschritt werden die Bereiche des Trägerteils, an denen keine elektrisch leitenden Verbindungen entstehen sollen, mit einer Kunststoff-Schutzschicht bespritzt. In einem dritten Verfahrensschritt werden sodann die elektrischen Verbindungsleitungen galvanisch auf die nicht umspritzte Oberfläche des Trägerteils aufgebracht, wodurch sich die Leiterbahnen herausbilden.

In einem vierten Verfahrensschritt wird das Sensorelement und die Messschaltung angebracht. Hierbei kann beispielsweise der Magnet mit Rippen auf Abstand gehalten und lagefixiert im Trägerteil montiert werden. Die somit montierten Bauelemente können im Bereich des Sensorelements noch mit einem Kunststoff- oder Keramikdeckel abgedeckt, verklebt oder warmverstemmt werden. Anschließend wird in einem fünften und letzten Verfahrensschritt die gesamte Anordnung mit Kunststoff umspritzt.

### Zeichnung

Ausführungsbeispiele des erfindungsgemäßen Messwertaufnehmers werden anhand der Zeichnung erläutert. Es zeigen:
Figur 1 einen Schnitt durch einen Messwertaufnehmer mit einem Trägerteil für das Sensorelement und einem weiteren Trägerteil für das Kontaktelement;
Figur 2 eine Detailansicht von gewellten Leiterbahnen auf dem Trägerteil;
Figur 3 eine Ansicht auf den Messwertaufnehmer nach Figur 1 von vorn auf die Kontaktstifte und
Figur 4 einen Schnitt durch einen Messwertaufnehmer mit einem einstückigen Trägerteil für das Sensorelement und für das Kontaktelement mit einer Kunststoff-Umspritzung als Gehäuse.

### Beschreibung der Ausführungsbeispiele

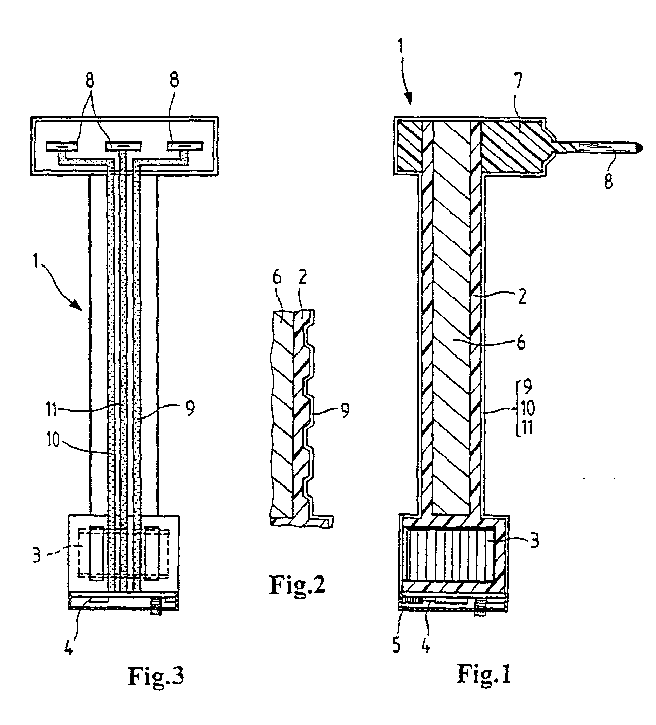

In Figur 1 ist ein Messwertaufnehmer 1 gezeigt, der als Phasengeber für eine Drehwinkelmessung oder als Drehzahlsensor beispielsweise in Kraftfahrzeugen einsetzbar ist. Der Messwertaufnehmer 1 weist ein Trägerteil 2 auf, das aus einer mit Palladium gefüllten Kunststoffmasse in der benötigten Form gegossen ist.

Im unteren Teil des Trägerteils 2 ist ein Magnet 3 als Bestandteil eines Sensorelements und eine, in einer für sich bekannten Art und Weise arbeitende Messschaltung 4 angeordnet, die mit einer Keramikkappe 5 verschlossen ist. Im Inneren des Trägerteils 2 kann aus Kostengründen eine einfache Füllmasse 6, ev. auch ein Nichteisenmetall, angebracht werden. Am oberen Ende des Trägerteils 2 ist bei diesem Ausführungsbeispiel ein weiteres Trägerteil 7 angeordnet, das Kontaktstifte 8 für ein äußeres, hier nicht dargestelltes, Anschlusskabel trägt.

Auf den Trägerteilen 2 und 7 sind Leiterbahnen 9, 10 und 11 als Verbindungsleitungen zwischen der Messschaltung 4 und den Kontaktstiften 8 mit einem sogenannten "Molded Interconnected Device (MID)"-Herstellungsverfahrens aufgebracht. Die Leiterbahnen 9,10 und 11 können dabei bevorzugt auch gewellt sein, wie es in Figur 2 im Detail dargestellt ist. Die Lage dieser Verbindungsleitungen 9, 10 und 11 auf den Trägerteilen 2 und 7 ist aus einer anderen Ansicht des Messwertaufnehmers 1 nach Figur 3 deutlich ersichtlich.

Bei dem zuvor erwähnten MID-Herstellungsverfahren wird zunächst das mit Palladium gefüllte Trägerteil 2 bzw. 7 spritzgegossen. In einem zweiten Verfahrensschritt werden die Bereiche des Trägerteils, an denen keine Leiterbahnen 9, 10 oder 11 entstehen sollen, mit einer Kunststoff-Schutzschicht bespritzt. In einem dritten Verfahrensschritt werden sodann die Leiterbahnen 9, 10 und 11 galvanisch auf die nicht umspritzte Oberfläche des Trägerteils 2 und 7 aufgebracht.

In einem vierten Verfahrensschritt wird der Magnet 3 als Teil des Sensorelements und die Messschaltung 4 angebracht. Hierbei kann beispielsweise der Magnet 3 mit Rippen auf Abstand gehalten und lagefixiert im Trägerteil 2 montiert werden. Die somit montierten Bauelemente 3 und 4 sind beim Ausführungsbeispiel mit einem aufgeclipsten Keramikdeckel 5 abgedeckt und in einem fünften und letzten Verfahrensschritt wird die gesamte Anordnung mit Kunststoff, z.B. mit PA6.6GF35, umspritzt.

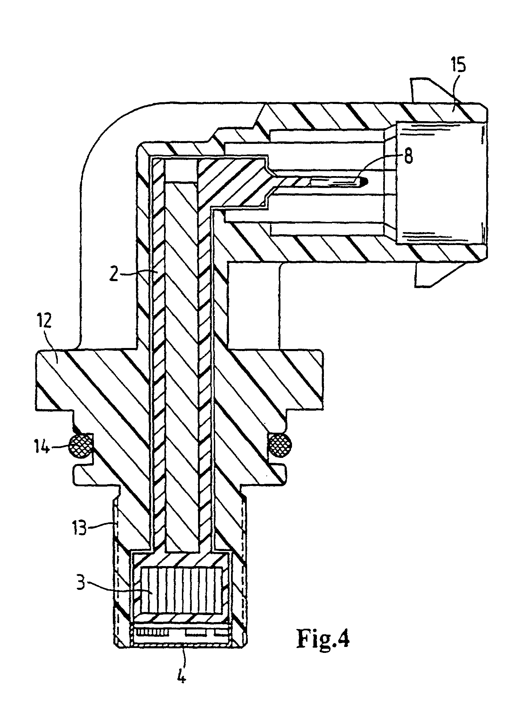

Beim Ausführungsbeispiel nach Figur 4 ist nur ein Trägerteil 2 vorhanden, das im unteren Teil den Magneten 3 und die Messschaltung 4 und im oberen Teil die Kontaktstifte 8 trägt. Ansonsten ist das Ausführungsbeispiel nach der Figur 4 identisch mit dem Ausführungsbeispiel nach der Figur 1. Aus der Figur 4 ist auch noch das Gehäuse 12 als Ergebnis der Kunststoff-Umspritzung zu erkennen. Dieses Gehäuse 12 kann beispielsweise über ein Gewinde 13 und einen Dichtungsring 14 im Bereich eines drehenden Teils in einem Kraftfahrzeug montiert werden. Ein kappenförmiges Anschlussteil 15 sorgt hierbei für eine geschützte Anschlussmöglichkeit von äußeren Anschlusskabeln an die Kontaktstifte 8 im oberen Bereich des Trägerteils 2.

## Patentansprüche

1. Meßwertaufnehmer mit einem Gehäuse (12), das folgende Bauelemente umschließt:
ein an einem Trägerteil (2) angebrachtes Sensorelement (3) zur Erfassung eines Meßwertes,
eine elektronische Meßschaltung (4) für den erfaßten Meßwert,
ein an einem Trägerteil (2, 7) angebrachtes Kontaktelement mit Kontaktstiften (8) für die Weiterleitung elektrischer Ausgangssignale,
elektrische Verbindungsleitungen (9, 10, 11) zwischen dem Sensorelement, der Meßschaltung (4) und den Kontaktstiften (8) und
eine Kunststoffumspritzung als Gehäuse (12) für die Bauelemente, wobei an einem Trägerteil (2) das Sensorelement (3), die Meßschaltung (4), die Kontaktstifte (8) und die Verbindungsleitungen (9, 10, 11) angebracht sind, wobei das Trägerteil (2, 7) aus einem mit Palladium gefüllten Kunststoffkörper besteht, auf den an vorgegebenen Stellen Leiterbahnen (9, 10, 11) zur Bildung der Verbindungsleitungen galvanisch anbringbar sind und wobei das Sensorelement aus einem in das Trägerteil (2, 7) eingegossenen oder verspannten Magneten (3) und einem Hall-Element besteht.

2. Meßwertaufnehmer mit einem Gehäuse (12), das folgende Bauelemente umschließt:
ein an einem Trägerteil (2, 7) angebrachtes Sensorelement (3) zur Erfassung eines Meßwertes,
eine elektronische Meßschaltung (4) für den erfaßten Meßwert,
ein an einem Trägerteil (2, 7) angebrachtes Kontaktelement mit Kontaktstiften (8) für die Weiterleitung elektrischer Ausgangssignale,
elektrische Verbindungsleitungen (9, 10, 11) zwischen dem Sensorelement (3), der Meßschaltung (4) und den Kontaktstiften (8) und eine Kunststoffumspritzung als Gehäuse (12) für die Bauelemente, wobei an einem ersten Trägerteil (2) das Sensorelement (3), die Meßschaltung (4) und die Verbindungsleitungen (9, 10, 11) sowie die Kontaktstifte (8) an einem weiteren Trägerteil (7) angebracht sind, wobei die Trägerteile (2, 7) aus einem mit Palladium gefüllten Kunststoffkörper bestehen, auf den an vorgegebenen Stellen Leiterbahnen (9, 10, 11) zur Bildung der Verbindungsleitungen galvanisch anbringbar sind, und
wobei das Sensorelement aus einem in das erste Trägerteil (2) eingegossenen oder verspannten Magneten (3) und einem Hall-Element besteht.

3. Meßwertaufnehmer nach einem der vorhergehenden Ansprüche, **dadurch gekennzeichnet, daß** separate elektronische Bauelemente und/oder integrierte elektronische Schaltungen direkt auf die Oberfläche des Trägerteils (2, 7) für das Sensorelement (3) aufgebracht sind, wobei die elektrischen Anschlüsse durch Reflow-Löten oder Bonden mit den als Leiterbahnen (9, 10, 11) fungierenden Stellen der Oberfläche des Trägerteils (2, 7) herstellbar sind.

4. Meßwertaufnehmer nach einem der vorhergehenden Ansprüche, **dadurch gekennzeichnet, daß** die Verbindungsleitungen (9, 10, 11), insbesondere in Längsrichtung zwischen dem Sensorelement (3) und den Kontaktstiften (8), auf der Oberfläche des Trägerteils (2) Wellen zur Ermöglichung einer Längsdehnung aufweisen.

5. Verfahren zur Herstellung eines Meßwertaufnehmers nach einem der vorhergehenden Ansprüche, **dadurch gekennzeichnet, daß** in einem ersten Verfahrensschritt eines Molded Interconnected Device (MID)-Herstellungsverfahrens des mit Palladium gefüllten Trägerteils (2, 7) spritzgegossen wird, daß in einem zweiten Verfahrensschritt auf die Bereiche des Trägerteils (2, 7), an denen keine elektrisch leitenden Verbindungen (9, 10, 11) entstehen sollen, eine Kunststoffschicht aufgespritzt wird, daß in einem dritten Verfahrensschritt die Verbindungsleitungen (9, 10, 11) galvanisch auf die Oberfläche des Trägerteils (2, 7) aufgebracht werden und daß in einem vierten Verfahrensschritt das Sensorelement (3) und die Meßschaltung
(4) angebracht werden, sowie in einem fünften Verfahrensschritt die gesamte Anordnung mit Kunststoff umspritzt wird.

## Claims

1. Transducer with a housing (12), which encloses the following components:
a sensor element (3) attached to a support part (2) for sensing a measured value,
an electronic measuring circuit (4) for the sensed measured value,
a contact element attached to a support part (2, 7) and
having contact pins (8) for the passing on of electrical output signals,
electrical connecting lines (9, 10, 11) between the sensor element, the measuring circuit (4) and the contact pins (8) and
a plastic encapsulation as the housing (12) for the components, with the sensor element (3), the measuring circuit (4), the contact pins (8) and the connecting lines (9, 10, 11) being attached to a support part (2), the support part (2, 7) comprising a body of plastic which is filled with palladium and to which conductor tracks (9, 10, 11) can be electrodeposited at predetermined locations for forming the connecting lines, and the sensor element comprising a magnet (3) moulded or clamped into the support part (2, 7) and a Hall element.

2. Transducer with a housing (12), which encloses the following components:
a sensor element (3) attached to a support part (2, 7) for sensing a measured value,
an electronic measuring circuit (4) for the sensed measured value,
a contact element attached to a support part (2, 7) and
having contact pins (8) for the passing on of electrical output signals,
electrical connecting lines (9, 10, 11) between the sensor element (3), the measuring circuit (4) and the contact pins (8) and
a plastic encapsulation as the housing (12) for the components, with the sensor element (3), the measuring circuit (4), the contact pins (8) and the connecting lines (9, 10, 11) being attached to a first support part (2) and the contact pins (8) being attached to a further support part (7), the support parts (2, 7) comprising a body of plastic which is filled with palladium and to which conductor tracks (9, 10, 11) can be electrodeposited at predetermined locations for forming the connecting lines, and the sensor element comprising a magnet (3) moulded or clamped into the first support part (2) and a Hall element.

3. Transducer according to one of the preceding claims, **characterized in that** separate electronic components and/or integrated electronic circuits are applied directly to the surface of the support part (2, 7) for the sensor element (3), it being possible for the electrical connections to be produced by reflow soldering or bonding to the locations of the surface of the support part (2, 7) acting as conductor tracks (9, 10, 11).

4. Transducer according to one of the preceding claims, **characterized in that** the connecting lines (9, 10, 11) have waves to permit longitudinal extension, in particular in the longitudinal direction between the sensor element (3) and the contact pins (8), on the surface of the support part (2).

5. Method for producing a transducer according to one of the preceding claims, **characterized in that** in a first method step of a moulded interconnected device (MID) production process the support part (2, 7) filled with palladium is injection-moulded, **in that** in a second process step a layer of plastic is sprayed onto the regions of the support part (2, 7) at which no electrically conducting connections (9, 10, 11) are to be created, **in that** in a third method step the connecting lines (9, 10, 11) are electrodeposited onto the surface of the support part (2, 7) and **in that** in a fourth method step the sensor element (3) and the measuring circuit (4) are attached, and furthermore **in that** in a fifth method step the entire arrangement is encapsulated in plastic.

## Revendications

1. Transducteur comportant un boîtier (12) et ayant les composants suivants :
- un élément de capteur (3) prévu sur une pièce de support (2) pour saisir une valeur de mesure,
- un circuit de mesure électronique (4) pour la valeur de mesure saisie,
- un élément de contact avec des broches de contact (8) pour la transmission des signaux électriques de sortie, prévus sur l'une des pièces de support (2, 7),
- des lignes de liaisons électriques (9, 10, 11) entre l'élément de capteur, le circuit de mesure (4) et les broches de contact (8) et,
- un enrobage en matière plastique injectée comme boîtier (12) pour les composants,
- une pièce de support (2) étant munie de l'élément de capteur (3), du circuit de mesure (4), des broches de contact (8) et des lignes de liaisons (9, 10, 11),
- la pièce de support (2, 7) étant formée d'un corps en matière plastique chargé de palladium avec à des endroits prédéterminés, des chemins conducteurs (9, 10, 11) mis en place de manière galvanique pour former les lignes de liaisons, et l'élément de capteur étant formé d'un aimant (3) coulé ou serré dans la pièce de support (2, 7) et d'un élément à effet Hall.

2. Transducteur comportant un boîtier (12) et ayant les composants suivants :
- un élément de capteur (3) prévu sur une pièce de support (2, 7) pour détecter une valeur de mesure,
- un circuit de mesure électronique (4) pour la valeur de mesure détectée,
- un élément de contact avec des broches de contact (8) pour la transmission des signaux électriques de sortie, sur l'une des pièces de support (2, 7),
- des lignes de liaisons électriques (9, 10, 11) entre l'élément de capteur (3), le circuit de mesure (4) et les broches de contact (8) ainsi qu'une injection de matière plastique comme boîtier (12) pour les composants,
- une première pièce de support (2) portant l'élément de capteur (3), le circuit de mesure (4), et des lignes de liaisons (9, 10, 11), ainsi qu'une autre pièce de support (7) portant les broches de contact (8),
- les pièces de support (2, 7) étant formées d'un corps en matière plastique chargé de palladium et sur lequel on a appliqué par voie galvanique des chemins conducteurs (9, 10, 11) pour former les lignes de liaisons à des endroits déterminés, et
- l'élément de capteur est formé d'un aimant (3) coulé ou serré dans la première pièce de support (2) et d'un élément à effet Hall.

3. Transducteur selon l'une quelconque des revendications précédentes,
**caractérisé par**
des composants électroniques séparés et/ou des circuits électroniques intégrés installés directement à la surface de la pièce de support (2, 7) pour l'élément de capteur (3), les branchements électriques étant réalisés par brasage à la vague ou fixation mécanique en des endroits de la surface de la pièce de support (2, 7) qui fonctionnent comme des chemins conducteurs (9, 10, 11).

4. Transducteur selon l'une quelconque des revendications précédentes,
**caractérisé en ce que**
les lignes de liaisons (9, 10, 11) notamment dans la direction longitudinale entre l'élément de capteur (3) et les broches de contact (8) ont des ondulations à la surface de la pièce de support (2) pour permettre un allongement dans la direction longitudinale.

5. Procédé de fabrication d'un capteur de valeur de mesure selon l'une quelconque des revendications précédentes,
**caractérisé en ce que**
- dans une première étape d'un procédé de fabrication MID (« Molded Interconnected Devise) (interconnexion par moulage) on injecte la pièce de support (2, 7) chargée de palladium,
- dans une seconde étape du procédé, sur les zones de la pièce de support (2, 7) dans lesquelles on ne veut pas réaliser de lignes de liaisons électriques (9, 10, 11), on injecte une couche de matière plastique,
- dans une troisième étape du procédé, on dépose les lignes de liaison (9, 10, 11) de manière galvanique à la surface de la pièce de support (2, 7), et
- dans une quatrième étape du procédé, on installe l'élément de capteur (3) et le circuit de mesure (4), et
- dans une cinquième étape du procédé, on injecte l'ensemble du dispositif avec de la matière plastique.
